# EUROPEAN PATENT SPECIFICATION

(11) **EP 3 542 682 B1**
(45) Date of publication and mention of the grant of the patent: **17.11.2021**
(21) Application number: 19163466.6
(22) Date of filing: 18.03.2019
(51) Int. Cl.: A47J 31/52, A47J 31/42, A47J 42/38, A47J 42/18

(54) **SYSTEM COMPRISING A COFFEE MACHINE AND A COFFEE GRINDER DEVICE OPERATIVELY INTERCONNECTED AND THE ADJUSTMENT METHOD THEREOF**
SYSTEM MIT EINER KAFFEEMASCHINE UND EINER KAFFEEMÜHLENVORRICHTUNG, DIE OPERATIV MITEINANDER VERBUNDEN SIND, UND EINSTELLVERFAHREN DAFÜR
SYSTÈME COMPRENANT UNE MACHINE À CAFÉ ET UN DISPOSITIF DE MOULIN À CAFÉ INTERCONNECTÉ DE FAÇON OPÉRATIONNELLE ET SON PROCÉDÉ DE RÉGLAGE

(30) Priority: 22.03.2018 IT 201800003856
(43) Date of publication of application: 25.09.2019
(73) Proprietor: Mazzer Luigi S.p.A., 30037 Scorzè, Venezia (IT)
(72) Inventor: MAZZER, Giovanni, 30037 Scorzè, VENEZIA (IT)
(74) Representative: Mitola, Marco

(56) References cited:
- EP-A1- 2 314 188
- EP-A1- 3 042 591
- EP-A1- 3 162 256
- WO-A1-2016/147026
- US-A1- 2016 366 905

## Description

### SCOPE

The present invention concerns a system comprising a coffee machine and a coffee grinder device, which are operatively interconnected, as well as the adjustment method thereof, in particular of the coffee grinder.

### STATE OF THE ART

In the art there are systems that provide for an adjustment of the coffee grinder using data processed by the coffee machine. In this way, one attempts to make a hypothetical grinding adjustment that is different from preparation to preparation and/or an adjustment of the fineness of the grind in relation to non-optimal extraction conditions that arise from the machine that performs it.

In other words, the coffee machine and the coffee grinder dialogue with each other to change the degree of fineness of the coffee powder obtained from the coffee grinder as a function of the coffee extraction obtained from the coffee machine. This dialogue and data exchange, with relative feedback in order to correct the grinding parameters accordingly, may take place via wire, or via a wireless system between the coffee grinder and the coffee machine, or it may be an internal communication in the coffee machine itself (if it has its own internal grinding device).

To use such communication systems, it is necessary (recommended) to use grinding systems without a grinding reservoir, otherwise there would be no way to adjust the grind differently between a dose and a portioned dose; rather one would have a reservoir of ground coffee that must be disposed of before using ground coffee with the new degree of fineness.

In effect, in the case of a grinding reservoir, it would not be possible to adjust the grinding abruptly.

Moreover, instant grinding is the only way to preserve the organoleptic characteristics of freshly ground coffee which, due to oxidation, tend to deteriorate very quickly.

Usually these known reservoirless grinding systems are grinding systems wherein the dose is made on the basis of predetermined grinding times (i.e. times of activation of the grinder motor) .

There are also systems that to some extent attempt to correlate greater or lesser fineness (which affects the productivity of the coffee grinder) with a corresponding variation in the dispensing time of the ground dose in order to keep the dose regular (understood as grams per dose used in the extraction).

In other words, other variables being equal, a finer grind corresponds to a smaller quantity of ground coffee produced in the same unit of time by the coffee grinder; for a necessary change in fineness required to correct the extraction of the coffee machine in order to maintain the same dose of coffee in the extraction, the grinding time is increased if one wants a finer grind, and vice versa if one wants a courser grind.

These known systems are not perfect because:
- various whole bean coffees have, with the same grinding adjustment point, different productivity (understood as the quantity of ground coffee produced with the same grinding time) as well as a different hypothetical correlation between productivity and the related adjustment variation;
- there are elements external to the coffee machine and the grinder that vary the productivity in the grinding and thus, even if no action has been taken on the coffee grinder, the dose that it delivers and that is sent to the espresso machine may be in significantly different quantities, or with different grain sizes, and cause different results than expected. This is the case, for example, in oxidation of the coffee beans in the feed hopper, absorption of ambient humidity, or temperature variations which, depending on the blend of beans used and the time that the blend spends in contact with these environmental agents, may change the average milling productivity and thus the dose of ground coffee delivered in the set unit of time.
- further unforeseen factors may occur, such as a lack of coffee beans in the collection hopper, the ground coffee falling out of the filter holder used to take the ground coffee from the coffee grinder for use in the infusion in the coffee machine, a problem of centering the same filter holder under the outlet of the dispensing duct of the ground coffee, etc. Such unforeseen factors are outside the realm of the coffee grinder, but the machine would interpret them incorrectly in the resulting extraction, attributing it to an incorrect degree of grinding.

For all these reasons, there is a concrete risk that during the evaluation of the extraction in the espresso machine or other infusion system, any over-extraction or under-extraction is interpreted as a consequence of a too fine or too coarse ground block through which the water is passed, when, on the other hand, the cause, despite having carried out a correct grinding, is an excessive or scarce dose that hampers or favors the flow of water through the ground coffee respectively. The document US2016366905 discloses a system comprising a dispensing machine and a grinding device interconnected by means of a control unit.

### PRESENTATION OF THE INVENTION

The need is therefore felt to resolve the drawbacks and limitations cited in reference to the known art.

Such a requirement is satisfied by an adjustment system according to claim 1 and by an adjustment method according to claim 12.

### DESCRIPTION OF THE DRAWINGS

Further features and advantages of the present invention will become more apparent from the following description of the preferred and non-limiting examples of embodiment thereof, wherein:
Figure 1 represents a schematic view of a system for the dispensing of beverages and/or infusions obtained from ground powder according to an embodiment of the present invention;
Figure 2 represents a schematic view of a system for the dispensing of beverages and/or infusions obtained from ground powder according to a further embodiment of the present invention;

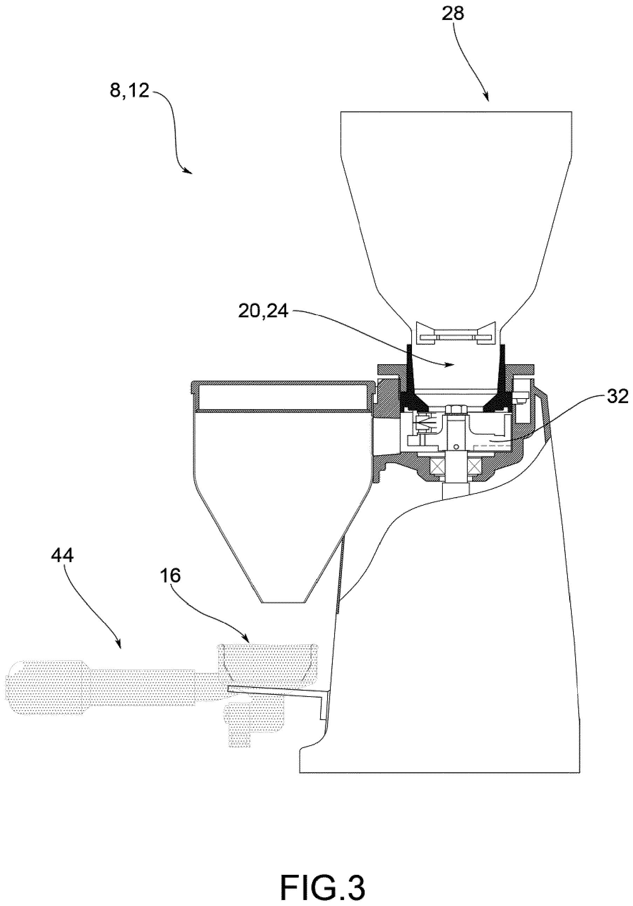

Figure 3 shows a side view of parts of a grinding device according to the present invention;

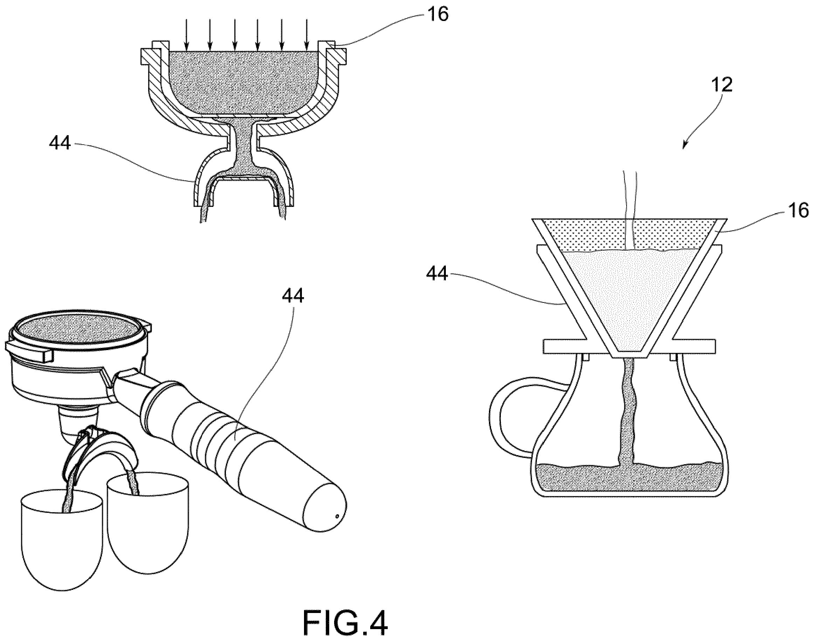

Figure 4 shows views of parts of a dispensing system according to the present invention.

The elements or parts of elements in common between the embodiments described hereinafter will be indicated at the same numerical references.

### DETAILED DESCRIPTION

With reference to the aforesaid figures, a global schematic view of a system for dispensing beverages and/or infusions obtained from ground powder, such as coffee, is indicated at the reference 4.

For the purposes of the present invention, it should be specified that the applications of the present invention are in no way limited to applications on coffee but should be considered in a broader sense, even if, in the following, for convenience, reference will often be made to coffee.

For this reason, reference will be made in the following to ground powder from grains or beans, meaning that the application of the present invention is not limited to coffee beans only, but to the infusion of any powder obtained by grinding beans or grains.

The system for dispensing beverages and/or infusions obtained from ground powder 4 comprises a dispensing machine 8 having at least one dispensing unit 12 for dispensing said beverages or infusions by means of water acting on a predetermined dose of ground powder contained in a filter 16.

For the purposes of the present invention, the type of dispensing machine 8 used is not relevant; the same applies to the beverage extraction system which may provide for the use of water and/or steam under pressure or even other methods for extracting the beverage.

The system 4 further comprises a grinding device 20 having at least one grinding unit 24 comprising a reservoir of grains or beans 28 and grinding means of the grains or beans 32 for obtaining said ground powder.

For the purposes of the present invention, neither the specific type of grinding device 20, nor the specific type of means for grinding the beans or grains 32 is relevant. Typically, but not exclusively, the means for grinding the beans or grains 32 comprise a pair of grinders that move mutually in such a way as to vary the degree of fineness obtainable for the coffee powder.

The dispensing machine 8 and the grinding device 20 are operatively interconnected by means of a control unit 36 programmed to control and adjust the grinding means 32 in order to obtain a certain degree of fineness of the ground powder, as a function of at least one or more infusion parameters of the dispensing machine 8 so that said infusion parameters remain within a predetermined range.

For example, the adjustment of the grinding means 32 consists in varying the mutual distance between the respective grinders so as to vary the degree of fineness obtainable for the ground powder. This adjustment may be made by means of values stored in the control unit 36 which correlate a certain distance between the grinders with a theoretical degree of fineness that is obtainable from the grinding.

The infusion parameters of the dispensing machine 8 represent parameters indicative of the type and/or quality of the beverage to be obtained.

Preferably, one of the infusion parameters consists of the dispensing time of the dose of beverage or infusion by the dispensing unit 12, with the same volume or weight of the liquid making up the same infusion. In effect, all other conditions being equal, comprising not only the volume but also the pressure and temperature of the infusion liquid, the dispensing time of the beverage or infusion dose is closely related to the degree of fineness of the ground powder.

In particular, by increasing the degree of fineness of the powder, i.e. by reducing the average diameter of the grains of powder, the dispensing time of the beverage or infusion dose is increased, and vice versa.

Therefore, all other things being equal, the dispensing time of the beverage or infusion dose is a clear indicator of the degree of fineness of the powder.

Preferably, the dispensing time is adjusted according to other infusion factors of the dispensing machine, which may comprise the temperature of the infused liquid and/or the pressure thereof. According to a further possible embodiment, the infusion parameter comprises the water flow profile in the infusion step. Note that the infusion parameters listed above may be monitored and maintained within their respective predetermined ranges either individually or in groups of infusion parameters. In other words, it is possible to monitor both individual infusion parameters and pluralities of infusion parameters so that each of them remains within a respective predetermined range.

Preferably, the control unit 36 has a programmable and/or variable dispensing time as a function of the type of beverage to be obtained.

In other words, the user may decide in advance the time of extraction or infusion of the beverage he/she intends to make, favoring, for example, a shorter time in order to reduce the extraction and thus the organoleptic characteristics of the beverage, and vice versa.

According to the invention, the system for dispensing beverages 4 is equipped with at least one weighing device 40 which weighs the amount of ground powder produced by the grinding device 20, ensuring that the amount is always within a
predetermined range, regardless of the adjustment made to the grinding means 32 as a function of the dose parameter.

In other words, regardless of the adjustment values linked to the infusion parameter, the weighing device 40 allows the quantity of ground powder to be kept always under control, guaranteeing the constancy of the mass of powder.

According to a possible embodiment, the weighing device 40 is connected to a filter holder 44 of the filter 16 that receives the ground powder directly from the grinding means 32, in order to weigh the powder actually present inside the filter 16 and stop the grinding in order to reach the predetermined weight range.

It should be noted that the term "range" or "interval" means a tolerance with respect to a predetermined reference value.

In this case, therefore, the exact content of ground powder that flows inside the filter 16 and thus will be subjected to the extraction and/or infusion step by the dispensing machine 8 is weighed.

According to a further embodiment, the weighing device 40 is designed to weigh the quantity of grains or beans sent to the grinding means 32 before they are ground.

The above applies to a dispensing system 4 wherein the dispensing machine 8 and the grinding device 20 are physically separated from each other and are operatively interconnected by a wireless or wired system.

It is also possible to apply the present invention to a solution wherein the dispensing machine 8 and the grinding device 20 are incorporated within the same device, in a so-called integrated system.

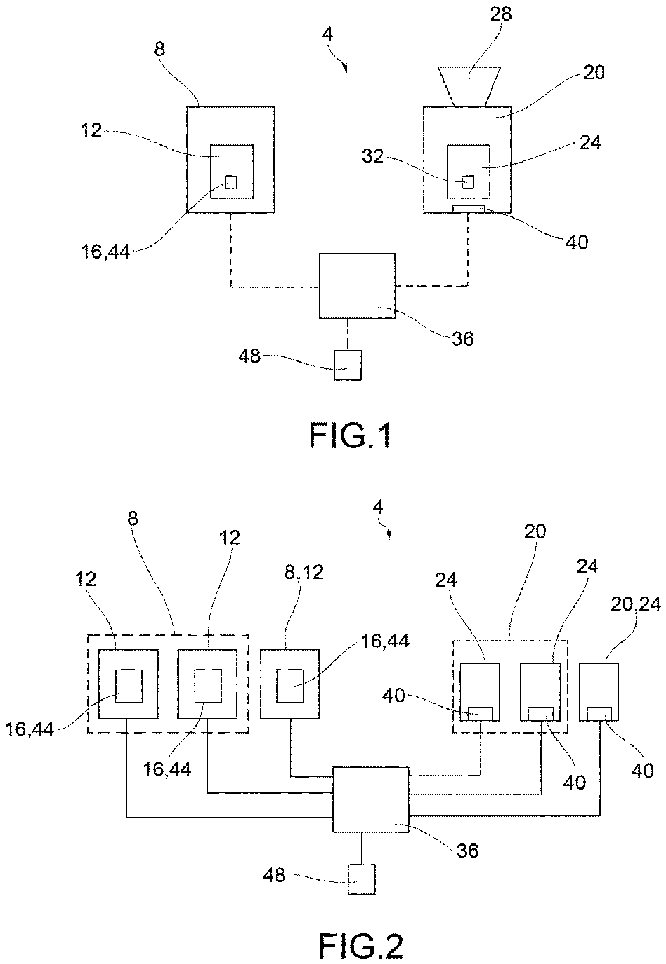

According to a possible embodiment (figure 2), the delivery system 4 comprises a plurality of dispensing units 12, each monitoring its own infusion parameter. In addition, each dispensing unit 12 will be operatively connected to at least one grinding device 20 so as to adjust the corresponding grinding unit 24 in order to obtain a certain degree of fineness of the ground powder for the same weight of ground powder.

Therefore, the present invention also applies to systems comprising a plurality of supply units 12 and a plurality of grinding devices 20, which may dialogue with each other through one or more control units 36, so as to manage, even simultaneously, the adjustment of the degree of fineness of the ground powder by any grinding unit 24, as requested at the moment by any dispensing unit 12.

According to a possible embodiment, the dispensing system 4 comprises monitoring means 48, operatively connected to the control unit 36, which monitor the correspondence of the infusion parameters, the adjustment values of the grinding means 32 of the grinding unit 24 and the weight value of the powder relative to respective reference ranges, so as to identify a potential malfunction in said grinding 24 or dispensing units 12 and/or in the weighing device 40.

In other words, in the event that the cross parameters between the dispensing units 12 and the grinding units 24 are not congruent, or deviate excessively from the reference parameters, the monitoring means 48 will be able to detect a potential malfunction of one or more units of the dispensing system 4, and to send, therefore, a warning signal and/or a request for a possible maintenance check.

The operation and thus the adjustment of a system according to the present invention will now be described.

In particular, the adjustment method of a system for dispensing beverages and/or infusions made from ground powder, comprises the steps of:
- providing a dispensing machine 8 having at least one dispensing unit 12 for dispensing said beverages or infusions by means of water acting on a predetermined dose of ground powder contained in a filter 16,
- establishing one or more infusion parameters of the dispensing machine 8 in relation to the type of beverage to be dispensed,
- providing a grinding device 20 having at least one grinding unit 24 comprising a reservoir of grains or beans 28 and grinding means 32 of the grains or beans for obtaining said ground powder,
- operatively connecting the dispensing machine 8 and the grinding device 20 by means of a control unit 36 programmed to control and adjust the grinding means 32 in order to obtain a certain degree of fineness of the ground powder as a function of said infusion parameters of the dispensing machine 8 so that said infusion parameters remain within a predetermined range,
- providing the system 4 for dispensing beverages with at least one weighing device 40 which weighs the amount of ground powder required by the grinding device 20, ensuring that the amount is always within a predetermined range, regardless of the adjustment made to the grinding means 32 as a function of the infusion parameters.

Preferably, the method comprises the step of setting, as an infusion parameter, the total dispensing time of the beverage.

Preferably, the method comprising the steps of:
- reducing the degree of fineness of the ground powder if the overall dispensing time is greater than the predetermined range,
- increasing the degree of fineness of the ground powder if the overall dispensing time is lower than the predetermined range,
- carrying out this adjustment with the same total mass of powder ground and inserted in the filter 16.

As may be appreciated from the foregoing, the present invention allows the drawbacks presented in the prior art to be overcome.

Due to the fact that the system weighs the dose of coffee actually ground and used in infusion, the feedback adjustment on the degree or fineness of the grinding is actually effective since the degree of grinding is corrected for the same total mass of coffee powder.

This ensures that the feedback on the degree of grinding is not inadvertently influenced by external factors, such as the lack of beans or grains in the hopper or the ground coffee accidently falling out of the filter due to a problem in centering the filter holder.

In effect, the system always guarantees the constancy of the mass of powder dispensed: with the same mass dispensed, it is guaranteed that the feedback corrections made to the coffee grinder group in order to modify the degree of fineness of the grinding truly take into account the fundamental parameters such as the variation in consistency and/or the degree of roasting of the beans or grains to be ground, the different grinding behavior thereof due to oxidation or absorption of moisture from the environment, without thereby being affected by other incidental parameters such as a lack of beans or grains in the hopper or the coffee accidentally falling outside the filter.

Moreover, unlike the known solutions, the consistency in mass of the dose delivered is also guaranteed, which is another essential parameter for the user to ensure the consistency of the characteristics obtainable in the final beverage.

Furthermore, a system with a weight control system may, if properly perfected, reduce the dose variation typical of other known systems, regardless of whether or not a fineness adjustment has been made, since the verification or control of the dose takes place according to the actual weight of the dispensed product and not according to a pre-set value linked, for example, to the operating time of the grinders.

A person skilled in the art, in the object of satisfying contingent and specific requirements, may make numerous modifications and variations to the adjustment systems and methods described above, all of which are contained within the scope of the invention as defined by the following claims.

## Claims

1. System (4) for dispensing beverages and/or infusions made from ground powder, comprising
- a dispensing machine (8) having at least one dispensing unit (12) for dispensing said beverages or infusions, by means of water acting on a predetermined dose of ground powder contained in a filter (16),
- a grinding device (20) having at least one grinding unit (24) comprising a reservoir of grains or beans (28) and grinding means (32) of the grains or beans for obtaining said ground powder,
- wherein the dispensing machine (8) and the grinding device (20) are operatively interconnected by means of a control unit (36) programmed to control and regulate the grinding means (32) in order to obtain a certain degree of fineness of the ground powder, depending on at least one infusion parameter of the dispensing machine (8) so that said infusion parameter remains within a predetermined range,
- **characterized in that** the system (4) for dispensing beverages is equipped with at least one weighing device (40) which weighs the amount of ground powder produced by the grinding device (20), ensuring that said amount is always within a predetermined range, regardless of the adjustment made of the grinding means (32) depending on the infusion parameter or changes in environmental conditions that change the grinding behavior of the grains or beans.

2. System (4) for dispensing beverages and/or infusions made from ground powder according to claim 1, wherein the infusion parameter consists of the dispensing time of the dose of beverage or infusion by the dispensing unit (12).

3. System (4) for dispensing beverages and/or infusions made from ground powder according to claim 1 or 2, wherein the infusion parameter comprises the water pressure profile in the infusion step.

4. System (4) for dispensing beverages and/or infusions made from ground powder according to claim 1 or 2 or 3, wherein the infusion parameter comprises the water flow profile in the infusion step.

5. System (4) for the dispensing of beverages and/or infusions obtained from powder ground according to any one of the preceding claims, wherein the control unit (36) has a dispensing time and a certain amount of liquid programmable and/or variable as a function of the type of beverage to be obtained.

6. System (4) for dispensing beverages and/or infusions made from powder ground according to any one of claims 1 to 5, wherein the grinding means (32) comprise a pair of mutually movable grinders, and wherein, depending on the infusion parameter, the control unit (36) is programmed to determine the mutual distance between said pair of grinders to vary the grinding fineness.

7. System (4) for dispensing beverages and/or infusions made from ground powder according to any one of the preceding claims, wherein the dispensing machine (8) and the grinding device (20) are physically separate from each other and are operatively interconnected by a wireless or wired system.

8. System (4) for dispensing beverages and/or infusions made from ground powder according to any one of the preceding claims, wherein the weighing device (40) is connected to a filter holder (44) of the filter (16) which receives the ground powder directly from the grinding means (32), so as to weigh the powder actually present inside the filter (16) and stop the grinding upon reaching a predetermined range.

9. System (4) for dispensing beverages and/or infusions made from ground powder according to any one of claims 1 to 7, wherein the weighing device (40) is conformed to weigh the quantity of grains or beans sent to the grinding means (32) before the grinding thereof.

10. System (4) for dispensing beverages and/or infusions made from ground powder according to any one of the preceding claims, wherein the dispensing machine (8) comprises a plurality of dispensing units (12) each monitoring its own infusion parameter, each dispensing unit (12) being operatively connected with at least one grinding device (20) so as to adjust the corresponding grinding means (32) in order to obtain a certain degree of fineness of the ground powder, maintaining the weight of the desired ground powder.

11. System (4) for dispensing beverages and/or infusions made from ground powder according to any one of the preceding claims, comprising monitoring means (48), operatively connected to the control unit (36), which monitor the correspondence of the infusion parameters, the adjustment values of the grinding means (32) of the grinding unit (24) and the weight value of powder relative to respective reference ranges, so as to identify a potential malfunction in said grinding (24) or dispensing (12) units and/or in the weighing device (40).

12. System (4) for dispensing beverages and/or infusions made from ground powder according to any one of the preceding claims, wherein the dispensing machine (8) and the grinding device (20) are integrated in the same body.

13. Adjustment method of a system (4) for dispensing beverages and/or infusions made from ground powder, comprising the steps of:
- providing a dispensing machine (8) having at least one dispensing unit (12) for dispensing said beverages or infusions, by means of water acting on a predetermined dose of ground powder contained in a filter (16),
- establishing one or more infusion parameters of the dispensing machine (8) in relation to the type of beverage to be dispensed,
- providing a grinding device (20) having at least one grinding unit (24) comprising a reservoir of grains or beans (28) and grinding means (32) of the grains or beans for obtaining said ground powder,
- operatively connecting the dispensing machine (8) and the grinding device (20) by means of a control unit (36) programmed to control and adjust the grinding means (32) in order to obtain a certain degree of fineness of the ground powder, as a function of said infusion parameters of the dispensing machine (8) so that said infusion parameters remain within a predetermined range,
- providing the system (4) for dispensing beverages with at least one weighing device (40), which weighs the amount of ground powder required by the grinding device (20), ensuring that such amount is always within a predetermined range, regardless of the adjustment made on the grinding means (32) as a function of the infusion parameters.

14. Adjustment method of a system (4) for dispensing beverages and/or infusions made from ground powder according to claim 13, comprising the step of setting, as an infusion parameter, the total time of the dispensing of the beverage, keeping the other parameters constant.

15. Adjustment method of a system (4) for dispensing beverages and/or infusions made from ground powder according to claim 14, comprising the steps of:
- reducing the degree of fineness of the ground powder if the overall dispensing time is greater than the predetermined range,
- increasing the degree of fineness of the ground powder if the overall dispensing time is lower than the predetermined range,
- carrying out such adjustments for the same overall mass of ground power.

16. Adjustment method of a system (4) for dispensing beverages and/or infusions made from ground powder, according to claim 13, 14 or 15, comprising the step of preparing a system (4) for dispensing beverages and/or infusions according to any one of the claims 1 to 12.

## Patentansprüche

1. System (4) zum Ausgeben von Getränken und/oder Aufgüssen aus gemahlenem Pulver, umfassend
- eine Ausgabemaschine (8) mit zumindest einer Ausgabeeinheit (12) zum Ausgeben der Getränke oder Aufgüsse mittels Wasser, das auf eine vorbestimmte Dosis gemahlenen Pulvers einwirkt, das in einem Filter (16) enthalten ist,
- eine Mahlvorrichtung (20) mit zumindest einer Mahleinheit (24), die ein Reservoir bzw. einen Vorrat an Körnern oder Bohnen (28) und Mahlmittel (32) für die Körner oder Bohnen zum Erhalten des gemahlenen Pulvers umfasst,
- wobei die Ausgabemaschine (8) und die Mahlvorrichtung (20) mittels einer Steuer- bzw. Regeleinheit (36) operativ miteinander verbunden sind, die dahingehend programmiert ist, die Mahlmittel (32) zu steuern und zu regulieren, um einen bestimmten Feinheitsgrad des gemahlenen Pulvers zu erhalten, und zwar abhängig von zumindest einem Aufgussparameter der Ausgabemaschine (8), so dass der Aufgussparameter innerhalb eines vorbestimmten Bereichs bleibt,
- **dadurch gekennzeichnet, dass** das System (4) zum Ausgeben von Getränken mit zumindest einer Wiegevorrichtung (40) ausgestattet ist, welche die von der Mahlvorrichtung (20) erzeugte Menge an gemahlenem Pulver wiegt, wobei sie sicherstellt, dass diese Menge immer innerhalb eines vorbestimmten Bereichs liegt, und zwar ungeachtet der Einstellung der Mahlmittels (32) in Abhängigkeit von dem Aufgussparameter oder Änderungen von Umgebungsbedingungen, die das Mahlverhalten der Körner oder Bohnen verändern.

2. System (4) zum Ausgeben von Getränken und/oder Aufgüssen aus gemahlenem Pulver nach Anspruch 1, wobei der Aufgussparameter aus der Ausgabezeit der Getränke- oder Aufgussdosis durch die Ausgabeeinheit (12) besteht.

3. System (4) zum Ausgeben von Getränken und/oder Aufgüssen aus gemahlenem Pulver nach Anspruch 1 oder 2, wobei der Aufgussparameter das Wasserdruckprofil in dem Aufgussschritt umfasst.

4. System (4) zum Ausgeben von Getränken und/oder Aufgüssen aus gemahlenem Pulver nach Anspruch 1 oder 2 oder 3, wobei der Aufgussparameter das Wasserströmungsprofil in dem Aufgussschritt umfasst.

5. System (4) zum Ausgeben von Getränken und/oder Aufgüssen aus gemahlenem Pulver nach einem der vorhergehenden Ansprüche, wobei die Steuer- bzw. Regeleinheit (36) eine Ausgabezeit und eine bestimmte Flüssigkeitsmenge programmierbar und/oder variabel in Abhängigkeit von dem Typ des zu erhaltenden Getränks aufweist.

6. System (4) zum Ausgeben von Getränken und/oder Aufgüssen aus gemahlenem Pulver nach einem der Ansprüche 1 bis 5, wobei die Mahlmittel (32) ein Paar zueinander bewegliche Mahlwerke umfassen und wobei abhängig von dem Aufgussparameter die Steuer- bzw. Regeleinheit (36) programmiert ist, den gegenseitigen Abstand zwischen dem Paar Mahlwerken zu bestimmen, um die Mahlfeinheit zu variieren.

7. System (4) zum Ausgeben von Getränken und/oder Aufgüssen aus gemahlenem Pulver nach einem der vorhergehenden Ansprüche, wobei die Ausgabemaschine (8) und die Mahlvorrichtung (20) physisch voneinander getrennt sind und durch ein drahtloses oder verdrahtetes bzw. kabelgebundenes System operativ miteinander verbunden sind.

8. System (4) zum Ausgeben von Getränken und/oder Aufgüssen aus gemahlenem Pulver nach einem der vorhergehenden Ansprüche, wobei die Wiegevorrichtung (40) mit einem Filterhalter (44) des Filters (16) verbunden ist, der das gemahlene Pulver direkt von den Mahlmitteln (32) empfängt, um das tatsächlich in dem Filter (16) vorhandene Pulver zu wiegen und das Mahlen bei Erreichen eines vorbestimmten Bereichs zu stoppen.

9. System (4) zum Ausgeben von Getränken und/oder Aufgüssen aus gemahlenem Pulver nach einem der Ansprüche 1 bis 7, wobei die Wiegevorrichtung (40) angepasst ist, die Menge an Körnern oder Bohnen zu wiegen, die vor ihrem Mahlen an die Mahlmittel (32) befördert werden.

10. System (4) zum Ausgeben von Getränken und/oder Aufgüssen aus gemahlenem Pulver nach einem der vorhergehenden Ansprüche, wobei die Ausgabemaschine (8) eine Mehrzahl von Ausgabeeinheiten (12) umfasst, die jeweils ihren eigenen Aufgussparameter überwachen, wobei jede Ausgabeeinheit (12) mit zumindest einer Mahlvorrichtung (20) operativ verbunden ist, um die entsprechenden Mahlmittel (32) einzustellen, um einen bestimmten Feinheitsgrad des gemahlenen Pulvers zu erhalten, wobei das Gewicht des gewünschten gemahlenen Pulvers beibehalten wird.

11. System (4) zum Ausgeben von Getränken und/oder Aufgüssen aus gemahlenem Pulver nach einem der vorhergehenden Ansprüche, umfassend Überwachungsmittel (48), die mit der Steuer- bzw. Regeleinheit (36) operativ verbunden sind, die die Entsprechung des Aufgussparameters, die Einstellwerte der Mahlmittel (32) der Mahleinheit (24) und den Gewichtswert des Pulvers relativ zu den jeweiligen Referenzbereichen überwachen, um eine mögliche Fehlfunktion bei den Mahleinheiten (24) oder Ausgabeeinheiten (12) und/oder bei der Wiegevorrichtung (40) zu identifizieren.

12. System (4) zum Ausgeben von Getränken und/oder Aufgüssen aus gemahlenem Pulver nach einem der vorhergehenden Ansprüche, wobei die Ausgabemaschine (8) und die Mahlvorrichtung (20) in demselben Körper integriert sind.

13. Einstellverfahren eines Systems (4) zum Ausgeben von Getränken und/oder Aufgüssen aus gemahlenem Pulver, umfassend die Schritte:
- Bereitstellen einer eine Ausgabemaschine (8) mit zumindest einer Ausgabeeinheit (12) zum Ausgeben der Getränke oder Aufgüsse mittels Wasser, das auf eine vorbestimmte Dosis gemahlenen Pulvers einwirkt, das in einem Filter (16) enthalten ist,
- Festlegen eines oder mehrerer Aufgussparameter der Ausgabemaschine (8) in Bezug auf den auszugebenden Getränketyp,
- Bereitstellen einer Mahlvorrichtung (20) mit zumindest einer Mahleinheit (24), die ein Reservoir bzw. einen Vorrat an Körnern oder Bohnen (28) und Mahlmittel (32) für die Körner oder Bohnen zum Erhalten des gemahlenen Pulvers umfasst,
- operatives Verbinden der Ausgabemaschine (8) und der Mahlvorrichtung (20) mittels einer Steuer- bzw. Regeleinheit (36), die dahingehend programmiert ist, die Mahlmittel (32) zu steuern und einzustellen, um einen bestimmten Feinheitsgrad des gemahlenen Pulvers zu erhalten, und zwar in Abhängigkeit von Aufgussparametern der Ausgabemaschine (8), so dass die Aufgussparameter innerhalb eines vorbestimmten Bereichs bleiben,
- Bereitstellen bzw. Versehen des Systems (4) zum Ausgeben von Getränken mit zumindest einer Wiegevorrichtung (40), welche die von der Mahlvorrichtung (20) geforderte Menge an gemahlenem Pulver wiegt, wobei sie sicherstellt, dass diese Menge immer innerhalb eines vorbestimmten Bereichs liegt, und zwar ungeachtet der Einstellung der Mahlmittels (32) in Abhängigkeit von den Aufgussparametern

14. Einstellverfahren eines Systems (4) zum Ausgeben von Getränken und/oder Aufgüssen aus gemahlenem Pulver nach Anspruch 13, umfassend den Schritt des Festlegens der Gesamtzeit der Ausgabe des Getränks als einen Aufgussparameter, wobei die anderen Parameter konstant gehalten werden.

15. Einstellverfahren eines Systems (4) zum Ausgeben von Getränken und/oder Aufgüssen aus gemahlenem Pulver nach Anspruch 14, umfassend die Schritte:
- Verringern des Feinheitsgrades des gemahlenen Pulvers, wenn die Gesamtausgabezeit größer als der vorbestimmte Bereich ist,
- Erhöhen des Feinheitsgrades des gemahlenen Pulvers, wenn die Gesamtausgabezeit niedriger als der vorbestimmte Bereich ist,
- Durchführen solcher Einstellungen für die gleiche Gesamtmasse des gemahlenen Pulvers.

16. Einstellverfahren eines Systems (4) zum Ausgeben von Getränken und/oder Aufgüssen aus gemahlenem Pulver nach Anspruch 13, 14 oder 15, umfassend den Schritt eines Vorbereitens bzw. Präparierens eines Systems (4) zum Ausgeben von Getränken und/oder Aufgüssen nach einem der Ansprüche 1 bis 12.

## Revendications

1. Système (4) pour la distribution de boissons et/ou d'infusions réalisées à partir de poudre moulue, comprenant
- une machine de distribution (8) présentant au moins une unité de distribution (12) pour la distribution desdites boissons ou infusions, au moyen d'eau agissant sur une dose prédéterminée de poudre moulue contenue dans un filtre (16),
- un dispositif de moulin (20) présentant au moins une unité de moulin (24) comprenant un réservoir de grains ou fèves (28) et des moyens de moulin (32) des grains ou fèves pour l'obtention de ladite poudre moulue,
- dans lequel la machine de distribution (8) et le dispositif de moulin (20) sont interconnectés de façon opérationnelle au moyen d'une unité de commande (36) programmée pour commander et réguler les moyens de moulin (32) afin d'obtenir un certain degré de finesse de la poudre moulue, selon au moins un paramètre d'infusion de la machine de distribution (8) de sorte que ledit paramètre d'infusion reste dans une plage prédéterminée,
- **caractérisé en ce que** le système (4) pour la distribution de boissons est équipé d'au moins un dispositif de pesage (40) qui pèse la quantité de poudre moulue produite par le dispositif de moulin (20), assurant que ladite quantité est toujours dans une plage prédéterminée, en dépit du réglage réalisé des moyens de moulin (32) selon le paramètre d'infusion ou les changements de conditions environnementales qui changent le comportement de mouture des grains ou fèves.

2. Système (4) pour la distribution de boissons et/ou d'infusions réalisées à partir de poudre moulue selon la revendication 1, dans lequel le paramètre d'infusion se compose du temps de distribution de la dose de boisson ou d'infusion par l'unité de distribution (12).

3. Système (4) pour la distribution de boissons et/ou d'infusions réalisées à partir de poudre moulue selon la revendication 1 ou 2, dans lequel le paramètre d'infusion comprend le profil de pression d'eau dans l'étape d'infusion.

4. Système (4) pour la distribution de boissons et/ou d'infusions réalisées à partir de poudre moulue selon la revendication 1 ou 2 ou 3, dans lequel le paramètre d'infusion comprend le profil de flux d'eau dans l'étape d'infusion.

5. Système (4) pour la distribution de boissons et/ou d'infusions obtenues à partir de poudre moulue selon l'une quelconque des revendications précédentes, dans lequel l'unité de commande (36) présente un temps de distribution et une certaine quantité de liquide programmable et/ou variable en fonction du type de boisson à obtenir.

6. Système (4) pour la distribution de boissons et/ou d'infusions réalisées à partir de poudre moulue selon l'une quelconque des revendications 1 à 5, dans lequel les moyens de moulin (32) comprennent une paire de moulins mobiles mutuellement, et dans lequel, selon le paramètre d'infusion, l'unité de commande (36) est programmée pour déterminer la distance mutuelle entre ladite paire de moulins pour faire varier la finesse de mouture.

7. Système (4) pour la distribution de boissons et/ou d'infusions réalisées à partir de poudre moulue selon l'une quelconque des revendications précédentes, dans lequel la machine de distribution (8) et le dispositif de moulin (20) sont séparés physiquement l'un de l'autre et sont interconnectés de façon opérationnelle par un système sans fil ou filaire.

8. Système (4) pour la distribution de boissons et/ou d'infusions réalisées à partir de poudre moulue selon l'une quelconque des revendications précédentes, dans lequel le dispositif de pesage (40) est connecté à un support de filtre (44) du filtre (16) qui reçoit la poudre moulue directement des moyens de moulin (32) de sorte à peser la poudre réellement présente à l'intérieur du filtre (16) et arrêter la mouture suite à l'atteinte d'une plage prédéterminée.

9. Système (4) pour la distribution de boissons et/ou d'infusions réalisées à partir de poudre moulue selon l'une quelconque des revendications 1 à 7, dans lequel le dispositif de pesage (40) est conformée pour peser la quantité de grains ou fèves envoyées aux moyens de moulin (32) avant leur mouture.

10. Système (4) pour la distribution de boissons et/ou d'infusions réalisées à partir de poudre moulue selon l'une quelconque des revendications précédentes, dans lequel la machine de distribution (8) comprend une pluralité d'unités de distribution (12) surveillant chacune son propre paramètre d'infusion, chaque unité de distribution (12) étant connectée de façon opérationnelle à au moins un dispositif de moulin (20) de sorte à ajuster les moyens de moulin (32) correspondants afin d'obtenir un certain degré de finesse de la poudre moulue, maintenant le poids de la poudre moulue souhaitée.

11. Système (4) pour la distribution de boissons et/ou d'infusions réalisées à partir de poudre moulue selon l'une quelconque des revendications précédentes, comprenant des moyens de surveillance (48), connectés de façon opérationnelle à l'unité de commande (36) qui surveillent la correspondance des paramètres d'infusion, les valeurs de réglage des moyens de moulin (32) de l'unité de moulin (24) et la valeur de poids de poudre par rapport aux plages de référence respectives de sorte à identifier un dysfonctionnement potentiel dans lesdites unités de moulin (24) ou de distribution (12) et/ou dans le dispositif de pesage (40).

12. Système (4) pour la distribution de boissons et/ou d'infusions réalisées à partir de poudre moulue selon l'une quelconque des revendications précédentes, dans lequel la machine de distribution (8) et le dispositif de moulin (20) sont intégrés dans le même corps.

13. Procédé de réglage d'un système (4) pour la distribution de boissons et/ou d'infusions réalisées à partir de poudre moulue, comprenant les étapes de :
- la fourniture d'une machine de distribution (8) présentant au moins une unité de distribution (12) pour la distribution desdites boissons ou infusions, au moyen d'eau agissant sur une dose prédéterminée de poudre moulue contenue dans un filtre (16),
- l'établissement d'un ou plusieurs paramètres d'infusion de la machine de distribution (8) en relation avec le type de boisson à distribuer,
- la fourniture d'un dispositif de moulin (20) présentant au moins une unité de moulin (24) comprenant un réservoir de grains ou fèves (28) et des moyens de moulin (32) des grains ou fèves pour obtenir ladite poudre moulue,
- la connexion opérationnelle de la machine de distribution (8) et du dispositif de moulin (20) au moyen d'une unité de commande (36) programmée pour commander et ajuster les moyens de moulin (32) afin d'obtenir un certain degré de finesse de la poudre moulue, en fonction desdits paramètres d'infusion de la machine de distribution (8) de sorte que lesdites paramètres d'infusion restent dans une plage prédéterminée,
- la dotation du système (4) pour la distribution de boissons d'au moins un dispositif de pesage (40) qui pèse la quantité de poudre moulue requise par le dispositif de moulin (20), assurant qu'une telle quantité soit toujours dans une plage prédéterminée, en dépit du réglage réalisé sur les moyens de moulin (32) en fonction des paramètres d'infusion.

14. Procédé de réglage d'un système (4) pour la distribution de boissons et/ou d'infusions réalisées à partir de poudre moulue selon la revendication 13, comprenant l'étape de réglage, comme un paramètre d'infusion, du temps total de la distribution de la boisson, maintenant les autres paramètres constants.

15. Procédé de réglage d'un système (4) pour la distribution de boissons et/ou d'infusions réalisées à partir de poudre moulue selon la revendication 14, comprenant les étapes de :
- la réduction du degré de finesse de la poudre moulue si le temps de distribution global est supérieur à la plage prédéterminée,
- l'augmentation du degré de finesse de la poudre moulue si le temps de distribution global est inférieur à la plage prédéterminée,
- la réalisation de tels réglages pour la même masse globale de poudre moulue.

16. Procédé de réglage d'un système (4) pour la distribution de boissons et/ou d'infusions réalisées à partir de poudre moulue selon la revendication 13, 14 ou 15, comprenant l'étape de préparation d'un système (4) pour la distribution de boissons et/ou d'infusions selon l'une quelconque des revendications 1 à 12.
